(19) Europäisches Patentamt
European Patent Office
Office européen des brevets

(11) EP 0 880 654 B1

(12) **EUROPÄISCHE PATENTSCHRIFT**

(45) Veröffentlichungstag und Bekanntmachung des Hinweises auf die Patenterteilung:
**17.11.1999 Patentblatt 1999/46**

(21) Anmeldenummer: **97904452.6**

(22) Anmeldetag: **15.02.1997**

(51) Int Cl.[6]: **F16H 61/00**, B60K 41/14, F16H 61/38

(86) Internationale Anmeldenummer:
**PCT/EP97/00723**

(87) Internationale Veröffentlichungsnummer:
**WO 97/31200 (28.08.1997 Gazette 1997/37)**

(54) **REGELSYSTEM FÜR EIN CVT**

REGULATING SYSTEM FOR A CONTINUOUSLY VARIABLE TRANSMISSION (CVT)

CIRCUIT DE COMMANDE POUR TRANSMISSION A VARIATION CONTINUE (CVT)

(84) Benannte Vertragsstaaten:
**BE DE FR GB SE**

(30) Priorität: **21.02.1996 DE 19606311**

(43) Veröffentlichungstag der Anmeldung:
**02.12.1998 Patentblatt 1998/49**

(73) Patentinhaber: **ZF-Batavia, L.L.C.**
**Plymouth, Michigan 48170-2456 (US)**

(72) Erfinder:
- **KNAPP, Thomas**
  **D-63791 Karlstein (DE)**
- **DANZ, Wolfgang**
  **D-88046 Friedrichshafen (DE)**

(74) Vertreter: **Zietlow, Karl-Peter**
**ZF FRIEDRICHSHAFEN AG**
**88038 Friedrichshafen (DE)**

(56) Entgegenhaltungen:
**EP-A- 0 140 228** **EP-A- 0 565 144**
**US-A- 4 743 223** **US-A- 4 989 149**
**US-A- 5 364 321**

- **PATENT ABSTRACTS OF JAPAN, unexamined applications, M Sektion, Band 11, Nr. 347, ver!ffentlicht 1987, 13 November, THE PATENT OFFICE JAPANESE GOVERNMENT, Seite 18 M 641; & JP,A,62 125 923 (FUJI HEAVY).**
- **PATENT ABSTRACTS OF JAPAN, unexamined applications, M Sektion, Band 13, Nr. 244, ver!ffentlicht 1989, 07 Juni, THE PATENT OFFICE JAPANESE GOVERNMENT, Seite 59 M 834; & JP,A,01 052 535 (FUJI HEAVY).**
- **PATENT ABSTRACTS OF JAPAN, unexamined applications, M Sektion, Band 13, Nr. 281, ver!ffentlicht 1989, 27 Juni, THE PATENT OFFICE JAPANESE GOVERNMENT, Seite 29 M 842; & JP,A,01 074 132 (DAIHATSU).**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 880 654 B1

## Beschreibung

Die Erfindung betrifft ein Regelsystem für ein CVT des Kegelscheibenumschlingungstyps, bei dem der Variator der Regelstrecke entspricht und die Übersetzung geregelt wird.

Stufenlose Automatgetriebe, nachfolgend CVT genannt (Continuously Variable Transmission), bestehen aus folgenden Baugruppen: Anfahreinheit, Vorwärts-/Rückwärtsfahreinheit, Variator, Zwischenwelle, Differential, hydraulischem und elektronischem Steuergerät. Der Variator wiederum besteht aus einem antriebsseitig angeordneten ersten Kegelscheibenpaar mit einer hydraulischen Verstelleinheit, einem abtriebsseitig angeordneten zweiten Kegelscheibenpaar mit einer hydraulischen Verstelleinheit und einem Umschlingungsorgan, das zwischen den Kegelscheibenpaaren läuft. Das erste Kegelscheibenpaar besteht aus einer in axialer Richtung feststehenden und einer beweglichen Kegelscheibe. Die auf der Antriebsseite angeordnete bewegliche Kegelscheibe wird nachfolgend als Primärscheibe bezeichnet. Das zweite Kegelscheibenpaar besteht ebenfalls aus einer in axialer Richtung feststehenden und beweglichen Kegelscheibe. Die auf der Abtriebsseite angeordnete bewegliche Kegelscheibe wird nachfolgend als Sekundärscheibe bezeichnet. Die axiale Position der Primärscheibe bestimmt hierbei den Laufradius des Umschlingungsorgans und somit die Übersetzung des CVT. Die axiale Position der Sekundärscheibe bestimmt den Anpreßdruck Sekundärscheibe/Umschlingungsorgan und somit die Momenten-Übertragungsfähigkeit. Die Verstellung der Primärund Sekundärscheibe geschieht über das Druckniveau in der jeweiligen hydraulischen Verstelleinheit. Diese Druckniveaus werden mittels eines elektro-magnetischen Druckreglers, der sich im hydraulischen Steuergerät befindet, durch das elektronische Steuergerät bestimmt. Üblicherweise wird bei einem derartigen CVT die Übersetzung geregelt. Als Führungsgröße werden zum Beispiel der Leistungswunsch eines Fahrers, die Übersetzung oder ein Druckniveau gewählt. In diesem Zusammenhang ist aus der EP-A-0 565 144 ein Regelkreis bekanntgeworden. Bei dem dargestellten Regelkreis entspricht ein gewünschtes Druckniveau der Führungsgröße. Die Regelgröße entspricht wiederum einem tatsächlich anliegenden Druckniveau. Ein elektromagnetischer Druckregler bzw. der Variator stellt die Regelstrecke dar. Aus dem Vergleich Regelgröße zu Führungsgröße ergibt sich die Regelabweichung. Diese ist die Eingangsgröße für einen Regler. Auf die Regelstrecke, den Variator, wirken verschiedene Störgrößen ein. Störgrößen sind zum Beispiel die Drehzahl der Primär- und Sekundärscheibe, das Druckniveau im Verstellraum der Sekundärscheibe und das Kräfteverhältnis der Primärscheibe zur Sekundärscheibe. Dieses ist wiederum eine Funktion des zu übertragenden Moments, der Übersetzung und der Kraft der Sekundärscheibe. Diese Störgrößen und die vorhandenen Nichtlinearitäten müssen im Regler kompensiert werden. Der Stand der Technik weist somit den Nachteil auf, daß hier ebenfalls eine Störgrößenaufschaltung und ein nichtlinearer Regler verwendet werden muß. Bekanntermaßen sind diese Reglerstrukturen sehr komplex und schwierig in der Abstimmung.

Die Erfindung hat somit zur Aufgabe, für ein CVT ein Regelsystem zu schaffen, welches einfach abzustimmen ist.

Die Aufgabe wird erfindungsgemäß durch die Merkmale von Anspruch 1 gelöst, indem der Regelstrecke ein Korrekturglied vorgeschaltet ist. Durch das Korrekturglied werden mittels eines mathematischen Modells die Nichtlinearitäten und Störgrößen der Regelstrecke ausgeglichen. Der Regler ist hierbei als PID-Regler ausgeführt.

Nach der Erfindung wird vorgeschlagen, daß das Druckniveau in der Verstelleinheit der Primärscheibe gemäß folgender Formel berechnet wird:

$$p1 = [C - d(i)\ (di_soll/dt)]/A1$$

mit

$$C = (p2 + K_R2n2^2)\ A2\ \mu - K_R1n1^2\ .\ A1$$

hierin bedeuten:

| | |
|---|---|
| p2: | Druckniveau der zweiten Verstelleinheit |
| A2: | Wirkfläche der zweiten Verstelleinheit |
| A1: | Wirkfläche der ersten Verstelleinheit |
| μ: | Kraftverhältnis Primärscheibe zu Sekundärscheibe (kp/ks) |
| d(i): | übersetzungsabhängiger Parameter |
| di_soll/dt: | Sollwert-Gradient der Übersetzungsänderung |
| n1: | Drehzahl Primärscheibe |
| n2: | Drehzahl Sekundärscheibe |
| K_R1: | rotatorischer Druckbeiwert Primärscheibe |

K_R2: rotatorischer Druckbeiwert Sekundärscheibe

Die erfindungsgemäße Lösung bietet den Vorteil, daß der Regler eine nahezu lineare Ersatzregelstrecke sieht.

In einer Ausgestaltung wird vorgeschlagen, daß bei einer schnellen Rückschaltung nach LOW (i = iMAX) das berechnete Druckniveau des Verstellraumes der Primärscheibe zu Null gesetzt wird (p1 = 0), falls dieses zu kleiner 0 bar berechnet wird. Der Sollwert für das Druckniveau des Verstellraumes der Sekundärscheibe p2 berechnet sich dann gemäß folgender Formel:

$$p2_soll = [d(i)\ (di_soll/dt) + A1K_R1n1^2]/A2\ \mu - K_R2n2^2$$

mit:

| | |
|---|---|
| A2: | Wirkfläche der zweiten Verstelleinheit |
| μ: | Kraftverhältnis Primärscheibe zu Sekundärscheibe (kp/ks) |
| d(i): | übersetzungsabhängiger Parameter |
| di_soll/dt: | Sollwert-Gradient der Übersetzungsänderung |
| n1: | Drehzahl Primärscheibe |
| n2: | Drehzahl Sekundärscheibe |
| K_R1: | rotatorischer Druckbeiwert Primärscheibe |
| K_R2: | rotatorischer Druckbeiwert Sekundärscheibe |

Eine schnelle Rückschaltung nach LOW muß zum Beispiel bei einer Blockierbremsung erfolgen.

In einer weiteren Ausgestaltung der Erfindung wird vorgeschlagen, daß bei einer schnellen Hochschaltung nach OVERDRIVE (i = iMIN) das berechnete Druckniveau des Verstellraumes der Primärscheibe gleich dem Systemdruck gesetzt wird (p1 = pS), für den Fall, daß der berechnete Druck pl größer als der Systemdruck ist (p1 > pS). Der Sollwert für das Druckniveau des Systemdruckes wird dann gemäß folgender Formel berechnet:

$$pS_soll = [C - (d(i)\ di_soll/dt)]/A1$$

$$C = [p2 + K_R2n2^2]\ .\ A2\ .\ \mu - N_R1n1^2A1$$

mit:

| | |
|---|---|
| A2: | Wirkfläche der zweiten Verstelleinheit |
| A1: | Wirkfläche der ersten Verstelleinheit |
| μ: | Kraftverhältnis Primärscheibe zu Sekundärscheibe (kp/ks) |
| d(i): | übersetzungsabhängiger Parameter |
| di_soll/dt: | Sollwert-Gradient der Übersetzungsänderung |
| n1: | Drehzahl Primärscheibe |
| n2: | Drehzahl Sekundärscheibe |
| K_R1: | rotatorischer Druckbeiwert Primärscheibe |
| K_R2: | rotatorischer Druckbeiwert Sekundärscheibe |

Diese beiden Ausgestaltungen bieten den Vorteil, daß hohe Verstellgradienten dadurch erreicht werden, daß das Druckniveau im Verstellraum der Sekundärscheibe bzw. des Systemdruckes entsprechend geregelt wird. Bekanntermaßen tritt bei hohen Verstellgradienten der Fall auf, daß das berechnete Druckniveau im Verstellraum der Primärscheibe negativ oder größer als der zur Verfügung stehende Systemdruck sein müßte.

In den Figuren ist ein Ausführungsbeispiel dargestellt.
Es zeigen:

Fig. 1 ein Systemschaubild eines CVT;

Fig. 2 einen Regelkreis gemäß Stand der Technik und

Fig. 3 einen Regelkreis gemäß der Erfindung.

Fig. 1 zeigt ein Systemschaubild, bestehend aus einer Antriebseinheit 1, zum Beispiel Brennkraftmaschine, einem CVT 3, einem hydraulischen Steuergerät 24 und einem elektronischen Steuergerät 19. Das CVT 3 wird von der Antriebseinheit 1 über eine Antriebswelle 2 angetrieben. Die Antriebswelle 2 treibt eine Anfahreinheit an. In Fig. 1 ist als Anfahreinheit ein hydrodynamischer Wandler 4 dargestellt. Der hydrodynamische Wandler 4 besteht bekanntermaßen aus einem Pumpenrad 5, Turbinenrad 6 und Leitrad 7. Parallel zum hydrodynamischen Wandler ist eine Wandlerüberbrückungskupplung ohne Bezugszeichen dargestellt. Mit dem Pumpenrad 5 des hydrodynamischen Wandlers 4 ist eine Pumpe 8 verbunden. Die Pumpe 8 fördert das Hydraulikmedium aus dem Schmiermittelsumpf zu den Stellgliedern des CVT 3. Das Turbinenrad 6 bzw. die Wandlerüberbrückungskupplung treiben eine erste Welle 9 an. Diese Welle 9 wiederum treibt eine Vorwärts-/Rückwärtsfahreinheit 10 an. Die Vorwärts-/Rückwärtsfahreinheit dient der Drehrichtungsumkehr. Ausgangsgröße der Vorwärts-/Rückwärtsfahreinheit ist eine zweite Welle 11. Die zweite Welle 11 ist mit dem Variator 28 verbunden. Der Variator 28 besteht aus einem ersten Kegelscheibenpaar 12, einem zweiten Kegelscheibenpaar 14 und dem Umschlingungsorgan 13. Das Umschlingungsorgan 13 läuft zwischen den beiden Kegelscheibenpaaren 12 und 14. Das auf der Antriebsseite angeordnete erste Kegelscheibenpaar 12 besteht aus einer in axialer Richtung feststehenden Scheibe und der Primärscheibe. Mit der Primärscheibe ist eine hydraulische Verstelleinheit verbunden, üblicherweise in Zylinderkolben-Form ausgeführt. Das auf der Sekundärseite angeordnete zweite Kegelscheibenpaar besteht aus einer in axialer Richtung feststehenden Kegelscheibe und der Sekundärscheibe. Die Sekundärscheibe weist ebenfalls eine hydraulische Verstelleinheit auf. Die Übersetzung des Getriebes wird verändert, indem die Position der Primärscheibe geändert wird. Dadurch ändert sich bekanntermaßen der Laufradius des Umschlingungsorgans 13. Der Variator 28 ist mit einer Abtriebswelle 15 verbunden. Eine Zwischenwelle 16 ist mit der Abtriebswelle 15 über ein Zahnradpaar verbunden. Die Zwischenwelle 16 dient der Drehrichtungsumkehr und einer Drehmoment- und Drehzahlanpassung. Die Zwischenwelle 16 ist über ein Zahnradpaar mit dem Differential 17 verbunden. Ausgangsgröße des Differentials 17 sind die beiden Achshalbwellen 18A und 18B, die auf die Antriebsräder eines nicht dargestellten Fahrzeugs führen. Da der mechanische Teil für das Verständnis der Erfindung nicht relevant ist, wird auf eine genauere Beschreibung verzichtet.

Das elektronische Steuergerät 19 steuert über elektromagnetische Stellglieder das CVT 3. Vom elektronischen Steuergerät 19 sind in stark vereinfachter Form als Funktionsblöcke der Micro-Controller 20, ein Funktionsblock Steuerung Stellglieder 21 und ein Funktionsblock Berechnung 22 dargestellt. Am elektronischen Steuergerät 19 sind Eingangsgrößen 23 angeschlossen. Eingangsgrößen 23 sind zum Beispiel das Signal einer Drosselklappe, das Signal der Drehzahl der Antriebseinheit, die Temperatur des Hydraulikmediums und das Druckniveau der Sekundärscheibe bzw. der Systemdruck. Als weitere Eingangsgrößen sind die Drehzahlen der Primärscheibe 25 und Sekundärscheibe 26 eingezeichnet. Der Micro-Controller berechnet mittels des Funktionsblokes 22 aus den Eingangsgrößen 23 bzw. Drehzahlen 25 und 26 die Funktionsparameter für das CVT 3. Diese werden mittels des Funktionsblockes Steuerung Stellglieder 21 über die elektro-magnetischen Stellglieder, welche sich im hydraulischen Steuergerät 24 des CVT 3 befinden, eingestellt. Als Funktionsparameter des CVT 3 bzw. Ausgangsgrößen des hydraulischen Steuergerätes 24 sind die Drücke für die Primärscheibe, Sekundärscheibe, der Systemdruck und der Kupplungs- bzw. Bremsdruck für die Vorwärts-/Rückwärtsfahreinheit dargestellt.

Fig. 2 zeigt einen vereinfachten Regelkreis gemäß dem Stand der Technik. Führungsgröße ist hierbei eine Soll-Übersetzung i_soll, Regelgröße ist die sich tatsächlich einstellende Übersetzung i_ist. Mit Bezugszeichen 27 ist der Regler dargestellt und mit Bezugszeichen 28 die Regelstrecke, hier der Variator. Aus dem Vergleich von Führungsgröße i soll und Regelgröße i_ist am Summationspunkt 30 entsteht die Regelabweichung li. Der Regler 27 versucht nun, diese Regelabweichung li zu Null zu regeln. Ausgangsgröße des Reglers 27 ist ein Stromwert i_iv. Dieser Stromwert wird über einen elektro-magnetischen Druckregler in einen Druckwert umgewandelt. Dieser Druckwert ist die Eingangsgröße für die Regelstrecke 28. Auf die Regelstrecke 28 wirken Störgrößen 29 ein. Störgrößen 29 sind: die Drehzahl der Primärscheibe, die Drehzahl der Sekundärscheibe, das Druckniveau im Verstellraum der Sekundärscheibe und das Kräfteverhältnis Primärscheibe zu Sekundärscheibe, welches wiederum eine Funktion des zu übertragenden Momentes der Übersetzung und der Kraft der Sekundärscheibe ist. Diese Störgrößen und vorhandene Nichtlinearitäten müssen durch einen nichtlinearen Regler kompensiert werden.

Fig. 3 zeigt einen Regelkreis gemäß der Erfindung. Zwischen dem Regler 27 und der Regelstrecke 28 ist zusätzlich ein Korrekturglied 31 eingefügt. Weiterhin wurde die Regelstrecke 28 in zwei Blöcke aufgeteilt, Bezugszeichen 32 und 33. Für die Führungsgröße, Regelgröße und Regelabweichung gilt das von Fig. 2 Gesagte. Ausgangsgröße des Reglers 27 ist hier ein Soll-Gradient di_soll/dt der Übersetzung i. Das Korrekturglied 31 enthält ein mathematisches Modell. Ausgangsgröße des Korrekturgliedes 31 ist wiederum ein Stromwert i_iv. Dieser Stromwert wird durch einen elektro-magnetischen Druckregler in einen Druckwert für die Regelstrecke 28 umgewandelt. Ausgangsgröße der Teil-Regelstreke 33 ist der Übersetzungsgradient di/dt. Dieser wird weiter auf den Integrator 32 geführt. Auf die Regelstreke 28 wirken die zuvor beschriebenen Störgrößen 29 ein, die im Korrekturglied 31 aufgeschaltet werden. Damit sind die Auswirkungen in der Gesamtheit minimal. Das mathematische Modell des Korrekturgliedes 31 stellt sich wie folgt dar:

$$p1 = [C - d(i)\ (di_soll/dt)]/A1$$

mit

$$C = (p2 + K_R2n2^2)\ A2\ \mu - K_R1n1^2\ .\ A1$$

hierin bedeuten:

| | |
|---|---|
| p2: | Druckniveau der zweiten Verstelleinheit |
| A2: | Wirkfläche der zweiten Verstelleinheit |
| A1: | Wirkfläche der ersten Verstelleinheit |
| μ: | Kraftverhältnis Primärscheibe zu Sekundärscheibe (kp/ks) |
| d(i): | übersetzungsabhängiger Parameter |
| di soll/dt: | Sollwert-Gradient der Übersetzungsänderung |
| n1: | Drehzahl Primärscheibe |
| n2: | Drehzahl Sekundärscheibe |
| K_R1: | rotatorischer Druckbeiwert Primärscheibe |
| K_R2: | rotatorischer Druckbeiwert Sekundärscheibe |

Der übersetzungsabhängige Parameter d(i) berücksichtigt die Tatsache, daß die Verstellgeschwindigkeit des Variators nicht linear, sondern hyperbelförmig verläuft. So ist zum Beispiel die Verstellgeschwindigkeit kleiner bei einer Verstellung Richtung OVERDRIVE (i = iMIN) als wie bei einer Verstellung Richtung LOW (i = iMAX).
Die erfindungsgemäße Lösung bietet den Vorteil, daß der Regler eine nahezu lineare Ersatzregelstrecke sieht. Der Regler kann als PID-Regler mit konstanten Parametern ausgeführt sein.

Für dieses mathematische Modell gelten zwei Sonderfälle: der erste Sonderfall liegt bei einer schnellen Rückschaltung nach LOW vor. Der zweite Sonderfall liegt bei einer schnellen Hochschaltung nach OVERDRIVE vor.
Im ersten Sonderfall ergibt die Berechnung, daß das Druckniveau im Verstellraum der Primärscheibe kleiner als 0 bar sein müßte. In diesem Fall wird dieses Druckniveau zu 0 bar gesetzt.
Hieraus ergibt sich folgende mathematische Beziehung für den Drucksollwert der Scheibe 2:

$$p2_soll = [d(i)\ (di_soll/dt) + A1K_R1n1^2]/A2\ \mu - K_R2n2^2$$

mit:

| | |
|---|---|
| A2: | Wirkfläche der zweiten Verstelleinheit |
| μ: | Kraftverhältnis Primärscheibe zu Sekundärscheibe (kp/ks) |
| d(i): | übersetzungsabhängiger Parameter |
| di_soll/dt: | Sollwert-Gradient der Übersetzungsänderung |
| n1: | Drehzahl Primärscheibe |
| n2: | Drehzahl Sekundärscheibe |
| K_R1: | rotatorischer Druckbeiwert Primärscheibe |
| K R2: | rotatorischer Druckbeiwert Sekundärscheibe |

Beim zweiten Sonderfall ergibt die mathematische Berechnung, daß das Druckniveau im Verstellraum der Primärscheibe größer sein müßte als der Systemdruck. Systemdruck ist der maximal mögliche, von der Pumpe zur Verfügung gestellte Druck, zum Beispiel 50 bar. In diesem Fall wird das Druckniveau des Verstellraumes der Primärscheibe gleich dem Druckniveau des Systemdruckes gesetzt. Hieraus ergibt sich folgende mathematische Beziehung:

$$pS_soll = [C - (d(i)\ di_soll/dt)]/A1$$

$$C = [p2 + K_R2n2^2]\ .\ A2\ .\ \mu - K_R1n1^2 A1$$

mit:

| | |
|---|---|
| A2: | Wirkfläche der zweiten Verstelleinheit |
| A1: | Wirkfläche der ersten Verstelleinheit |
| μ: | Kraftverhältnis Primärscheibe zu Sekundärscheibe (kp/ks) |
| d(i): | übersetzungsabhängiger Parameter |
| di_soll/dt: | Sollwert-Gradient der Übersetzungsänderung |
| n1: | Drehzahl Primärscheibe |
| n2: | Drehzahl Sekundärscheibe |
| K_R1: | rotatorischer Druckbeiwert Primärscheibe |
| K_R2: | rotatorischer Druckbeiwert Sekundärscheibe |

Bezugszeichen

| | |
|---|---|
| 1 | Antriebseinheit |
| 2 | Antriebswelle |
| 3 | CVT |
| 4 | hydrodynamischer Wandler und Wandlerüberbrückungkupplung |
| 5 | Pumpenrad |
| 6 | Turbinenrad |
| 7 | Leitrad |
| 8 | Pumpe |
| 9 | erste Welle |
| 10 | Vorwärts-/Rückwärtsfahreinheit |
| 11 | zweite Welle |
| 12 | erstes Kegelscheibenpaar |
| 13 | Umschlingungsorgan |
| 14 | zweites Kegelscheibenpaar |
| 15 | Abtriebswelle |
| 16 | Zwischenwelle |
| 17 | Differential |
| 18A | Achshalbwelle |
| 18B | Achshalbwelle |
| 19 | elektronisches Steuergerät |
| 20 | Micro-Controller |
| 21 | Funktionsblock Steuerung Stellglieder |
| 22 | Funktionsblock Berechnung |
| 23 | Eingangsgrößen |
| 24 | hydraulisches Steuergerät |
| 25 | Drehzahl Primärscheibe |
| 26 | Drehzahl Sekundärscheibe |
| 27 | Regler |
| 28 | Regelstrecke |
| 29 | Störgrößen |
| 30 | Summationspunkt |
| 31 | Korrekturglied |
| 32 | Integrator |
| 33 | Variator |

**Patentansprüche**

1. Regelsystem für die Übersetzung (i) eines CVT (3), das CVT (3), bestehend aus einem elektronischen Steuergerät (19), einem hydraulischen Steuergerät (24) und einem Variator (28), der Variator (28) wiederum besteht aus einem antriebsseitig angeordneten ersten Kegelscheibenpaar (12) mit einer ersten hydraulischer Verstelleinheit, einem abtriebsseitig angeordneten zweiten Kegelscheibenpaar (14) mit einer zweitem hydraulischer Verstelleinheit und einem Umschlingungsorgan (13), das zwischen den Kegelscheibenpaaren (12, 14) läuft, das erste Kegelscheibenpaar (12) besteht aus einer in axialer Richtung feststehenden Kegelscheibe und einer in axialer Richtung beweglichen Primärscheibe, das zweite Kegelscheibenpaar (14) besteht aus einer in axialer Richtung feststehenden Kegelscheibe und einer in axialer Richtung beweglichen Sekundärscheibe, wobei das elektronische Steuergerät (19) aus Eingangsgrößen (23, 25, 26) die Regelparameter des CVT (3) bestimmt und mittels des hydraulischen Steuergeräts (24), der ersten und zweiten Verstelleinheit über die axiale Position der Primär- und Sekundärscheibe die Übersetzung (i) und den Anpreßdruck Kegelscheibe/Umschlingungsorgan regelt, hierbei der Variator (28) der Regelstrecke entspricht und ein Regler (27) aus der Regelabweichung eine Stellgröße (i_iv) für die Regelstrecke (28) bildet, dadurch **gekennzeichnet,** daß der Regelstrecke (28) ein Korrekturglied (31) vorgeschaltet ist, hierbei das Korrekturglied (31) über ein mathematisches Modell die Nichtlinearitäten und Störgrößen der Regelstrecke (28) ausgleicht und der Regler (27) als einfacher PID-Regler ausgeführt ist, wobei das Druckniveau der ersten Verstelleinheit (pl) gemäß folgender Formel berechnet wird:

$$p1 = [C - d(i)\ (di_soll/dt)]/A1$$

mit

$$C = (p2 + K_R2n2^2)\ A2\ \mu - K_R1n1^2\ .\ A1$$

hierin bedeuten:

| | |
|---|---|
| p2: | Druckniveau der zweiten Verstelleinheit |
| A2: | Wirkfläche der zweiten Verstelleinheit |
| A1: | Wirkfläche der ersten Verstelleinheit |
| μ: | Kraftverhältnis Primärscheibe zu Sekundärscheibe (kp/ks) |
| d(i): | übersetzungsabhängiger Parameter |
| di soll/dt: | Sollwert-Gradient der Übersetzungsänderung |
| n1: | Drehzahl Primärscheibe |
| n2: | Drehzahl Sekundärscheibe |
| K_R1: | rotatorischer Druckbeiwert Primärscheibe |
| K_R2: | rotatorischer Druckbeiwert Sekundärscheibe |

worin die Drehzahl der Primärscheibe, die Drehzahl der Sekundärscheibe, das Druckniveau im Verstellraum der Sekundärscheibe und das Kräfteverhältnis Primärscheibe zu Sekundärscheibe die Störgrößen und der Variator die Nichtlinearität darstellen.

**2.** Regelsystem nach Anspruch 1, dadurch **gekennzeichnet,** daß bei einer schnellen Rückschaltung nach LOW (i = iMAX) das Druckniveau des ersten Verstellraumes zu Null gesetzt wird (p1 = 0) und der Sollwert für das Druckniveau des zweiten Verstellraumes (p2 soll) gemäß folgender Formel berechnet wird:

$$p2_soll = [d(i)\ di\ soll/dt + A1K_R1n1^2]/A2\ \mu - K_R2n2^2$$

mit:

| | |
|---|---|
| A2: | Wirkfläche der zweiten Verstelleinheit |
| μ: | Kraftverhältnis Primärscheibe zu Sekundärscheibe (kp/ks) |
| d(i): | übersetzungsabhängiger Parameter |
| di_soll/dt: | Sollwert-Gradient der Übersetzungsänderung |
| n1: | Drehzahl Primärscheibe |
| n2: | Drehzahl Sekundärscheibe |
| K_R1: | rotatorischer Druckbeiwert Primärscheibe |
| K_R2: | rotatorischer Druckbeiwert Sekundärscheibe |

**3.** Regelsystem nach Anspruch 1, dadurch **gekennzeichnet,** daß bei einer schnellen Hochschaltung nach OVERDRIVE (i = iMIN) das Druckniveau des ersten Verstellraumes gleich dem Druckniveau des Systemdruckes gesetzt wird (p1 = pS) und der Sollwert für das Druckniveau des Systemdruckes (pS_soll) gemäß folgender Formel berechnet wird:

$$pS_soll = [C - (d(i)\ di_soll/dt)]/A1$$

$$C = [p2 + K_R2n2^2]\ .\ A2\ .\ \mu - K_R1n1^2 A1$$

mit:

| | |
|---|---|
| A2: | Wirkfläche der zweiten Verstelleinheit |
| A1: | Wirkfläche der ersten Verstelleinheit |
| μ: | Kraftverhältnis Primärscheibe zu Sekundärscheibe (kp/ks) |
| d(i): | übersetzungsabhängiger Parameter |
| di soll/dt: | Sollwert-Gradient der Übersetzungsänderung |
| n1: | Drehzahl Primärscheibe |
| n2: | Drehzahl Sekundärscheibe |
| K_R1: | rotatorischer Druckbeiwert Primärscheibe |
| K_R2: | rotatorischer Druckbeiwert Sekundärscheibe |

**Claims**

1. Control system for the transmission (i) of a CVT (3), the CVT (3) consisting of an electronic control instrument (19), a hydraulic control instrument (24) and a variator (28), the variator (28) consists, in turn, of a first pair of conical discs (12) arranged on the drive side with a first hydraulic adjusting unit, a second pair of conical discs (14) arranged on the drive side with a second hydraulic adjusting unit and a flexible-drive element (13) which operates between the pairs of conical discs (12, 14), the first pair of conical discs (12) consists of a conical disc that is fixed in the axial direction and a primary disc that is mobile in the axial direction, the second pair of conical discs (14) consists of a conical disc that is fixed in the axial direction and a secondary disc that is mobile in the axial direction, whereby the electronic control instrument (19) determines the control parameters of the CVT (3) from input variables (23, 25, 26) and via the axial position of the primary and secondary discs regulates the transmission (i) and the surface pressure between conical disc and flexible-drive element by means of the hydraulic control instrument (24) and the first and second adjusting units, the variator (28) corresponding to the controlled member and a regulator (27) deriving from the control deviation an actuating variable (i_iv) for the controlled member (28), characterised in that a correcting element (31) is connected in series upstream of the controlled member (28), the correcting element (31) compensating for the non-linearities and perturbance variables of the controlled member (28) with the aid of a mathematical model and the regulator (27) being constructed in the form of a simple PID regulator, whereby the pressure level of the first adjusting unit (p1) is calculated in accordance with the following formula:

$$p1 = [C - d(i)\ (di_des/dt)]/A1$$

with

$$C = (p2 + K_R2n2^2)\ A2\ \mu - K_R1n1^2\ .\ A1$$

with the following meanings:

| | |
|---|---|
| p2: | pressure level of the second adjusting unit |
| A2: | effective area of the second adjusting unit |
| A1: | effective area of the first adjusting unit force ratio of primary disc to secondary disc (fp/fs) |
| d(i): | transmission-dependent parameter |
| di_des/dt: | desired-value gradient of the change in transmission |
| n1: | rotary speed, primary disc |
| n2: | rotary speed, secondary disc |

| | |
|---|---|
| K_R1: | rotational pressure coefficient, primary disc |
| K_R2: | rotational pressure coefficient, secondary disc |

wherein the rotary speed of the primary disc, the rotary speed of the secondary disc, the pressure level in the adjusting space of the secondary disc and the force ratio of primary disc to secondary disc represent the perturbance variables and the variator represents the non-linearity.

**2.** Control system according to Claim 1, characterised in that in the event of a rapid down-shift to LOW (i = iMAX) the pressure level of the first adjusting space is set to zero (p1 = 0) and the desired value for the pressure level of the second adjusting space (p2_des) is calculated in accordance with the following formula:

$$p2_des = [d(i)\ di_des/dt + A1K_R1n1^2)/A2\ \mu - K_R2n2^2$$

with:

| | |
|---|---|
| A2: | effective area of the second adjusting unit |
| μ: | force ratio of primary disc to secondary disc (fp/fs) |
| d(i): | transmission-dependent parameter |
| di_des/dt: | desired-value gradient of the change in transmission |
| n1: | rotary speed, primary disc |
| n2: | rotary speed, secondary disc |
| K_R1: | rotational pressure coefficient, primary disc |
| K_R2: | rotational pressure coefficient, secondary disc |

**3.** Control system according to Claim 1, characterised in that in the event of a rapid up-shift to OVERDRIVE (i = iMIN) the pressure level of the first adjusting space is set equal to the pressure level of the system pressure (p1 = pS) and the desired value for the pressure level of the system pressure (pS_des) is calculated in accordance with the following formula:

$$pS_des = [C - (d(i)\ di_des/dt)]/A1$$

$$C = [p2 + K_R2n2^2]\ .\ A2\ .\ \mu - K_R1n1^2A1$$

with:

| | |
|---|---|
| A2: | effective area of the second adjusting unit |
| A1: | effective area of the first adjusting unit |
| μ: | force ratio of primary disc to secondary disc (fp/fs) |
| d(i): | transmission-dependent parameter |
| di_des/dt: | desired-value gradient of the change in transmission |
| n1: | rotary speed, primary disc |
| n2: | rotary speed, secondary disc |
| K_R1: | rotational pressure coefficient, primary disc |
| K_R2: | rotational pressure coefficient, secondary disc |

## Revendications

**1.** Système de régulation pour la transmission (i) d'une CVT (3), la CVT (3) se composant d'un appareil de commande électronique (19), d'un appareil de commande hydraulique (24) et d'un variateur (28), le variateur (28) lui-même se composant d'une paire de disques coniques (12) disposée du côté entraînement avec une première unité de réglage hydraulique, d'une deuxième paire de disques coniques (14) disposée du côté entraîné avec une deuxième unité de réglage hydraulique, et d'un organe d'enroulement (13) fonctionnant entre les paires de disques coniques (12, 14), la première paire de disques coniques (12) se composant d'un disque conique fixe dans le sens axial et d'un disque primaire mobile dans le sens axial, la deuxième paire de disques coniques (14) se composant d'un disque conique fixe dans le sens axial et d'un disque secondaire mobile dans le sens axial, dans lequel l'appareil de commande électronique (19) détermine, à partir de grandeurs d'entrée (23, 25, 26), les paramètres de réglage de la CVT (3) et règle par l'intermédiaire de l'appareil de commande hydraulique (24) de la première et de la deuxième unité de réglage, par la position axiale du disque primaire et du disque secondaire, la transmission (i) et la pression d'adhérence disque conique/organe d'enroulement, le variateur (28) correspondant alors au système asservi, et un régulateur (27) formant à partir de la déviation de réglage, une grandeur de réglage (i_iv) pour le système asservi (28), **caractérisé en ce** qu'un élément correcteur (31) est monté en amont du système asservi (28), l'élément correcteur (31) compensant, par l'intermédiaire d'un modèle mathématique, les non-linéarités et les grandeurs perturbatrices du système asservi (28) et le régulateur (27) étant réalisé comme un simple régulateur à triple action, dans lequel le niveau de pression de la première unité de réglage (p1) étant calculé selon la formule suivante:

$$p1 = [C - d(i)\ (di_soll/dt)]/A1$$

avec

$$C = (p2 + K_R2Rn2^2)\ A2\ \mu - K_R1n1^2.A1$$

où:

| | |
|---|---|
| p2: | niveau de pression de la deuxième unité de réglage |
| A2: | surface active de la deuxième unité de réglage |
| A1: | surface active de la première unité de réglage |
| μ: | rapport de force entre disque primaire et disque secondaire (kp/ks) |
| d(i): | paramètre dépendant de la transmission |
| di_soll/dt: | gradient de la valeur de consigne de la variation de transmission |
| n1: | vitesse de rotation disque primaire |
| n2: | vitesse de rotation disque secondaire |
| K_R1: | facteur de correction de révolution disque primaire |
| K_R2: | facteur de correction de révolution disque secondaire |

où la vitesse de rotation du disque primaire, la vitesse de rotation du disque secondaire, le niveau de pression dans l'espace de réglage du disque secondaire et le rapport des forces entre disque primaire et disque secondaire représentent les grandeurs perturbatrices et le variateur représente la non-linéarité.

**2.** Système de régulation selon la revendication 1, caractérisé en ce que lors d'un engagement rapide d'une vitesse inférieure vers BAS (i=iMAX), le niveau de pression du premier espace de réglage est réglé sur zéro (p1 = 0) et la valeur de consigne pour le niveau de pression du deuxième espace de réglage (p2_soll) est calculé selon la formule suivante :

$$p2_soll = [d(i)\ di_soll/dt + A1K_R1n1^2]A2\mu - K_R2n2^2$$

où :

| | |
|---|---|
| A2 : | surface active de la deuxième unité de réglage |
| μ: | rapport de force entre disque primaire et disque secondaire (kp/ks) |
| d(i): | paramètre dépendant de la transmission |
| di_soll/dt : | gradient de la valeur de consigne de la variation de transmission |
| n1: | vitesse de rotation disque primaire |
| n2: | vitesse de rotation disque secondaire |
| K_R1 : | facteur de correction de révolution disque primaire |
| K_R2: | facteur de correction de révolution disque secondaire |

**3.** Système de régulation selon la revendication 1, caractérisé en ce que lors d'un engagement rapide d'une vitesse supérieure vers OVERDRIVE (i=iMIN), le niveau de pression du premier espace de réglage est réglé de façon à être égal au niveau de la pression du système ($p1 = pS$) et la valeur de consigne pour le niveau de pression du système (pS_soll) est calculé selon la formule suivante :

$$pS_soll = [C - (d(i)di_soll/dt]/A1$$

$$C = [\ p2 + K_R2n2^{2}].\ A2\ .\ \mu\ -\ K_R1n1^{2}A1$$

où :

| | |
|---|---|
| A2: | surface active de la deuxième unité de réglage |
| A1: | surface active de la première unité de réglage |
| μ: | rapport de force entre disque primaire et disque secondaire (kp/ks) |
| d(i): | paramètre dépendant de la transmission |
| di_soll/dt: | gradient de la valeur de consigne de la variation de transmission |
| n1: | vitesse de rotation disque primaire |
| n2: | vitesse de rotation disque secondaire |
| K_R1: | facteur de correction de révolution disque primaire |
| K_R2: | facteur de correction de révolution disque secondaire. |

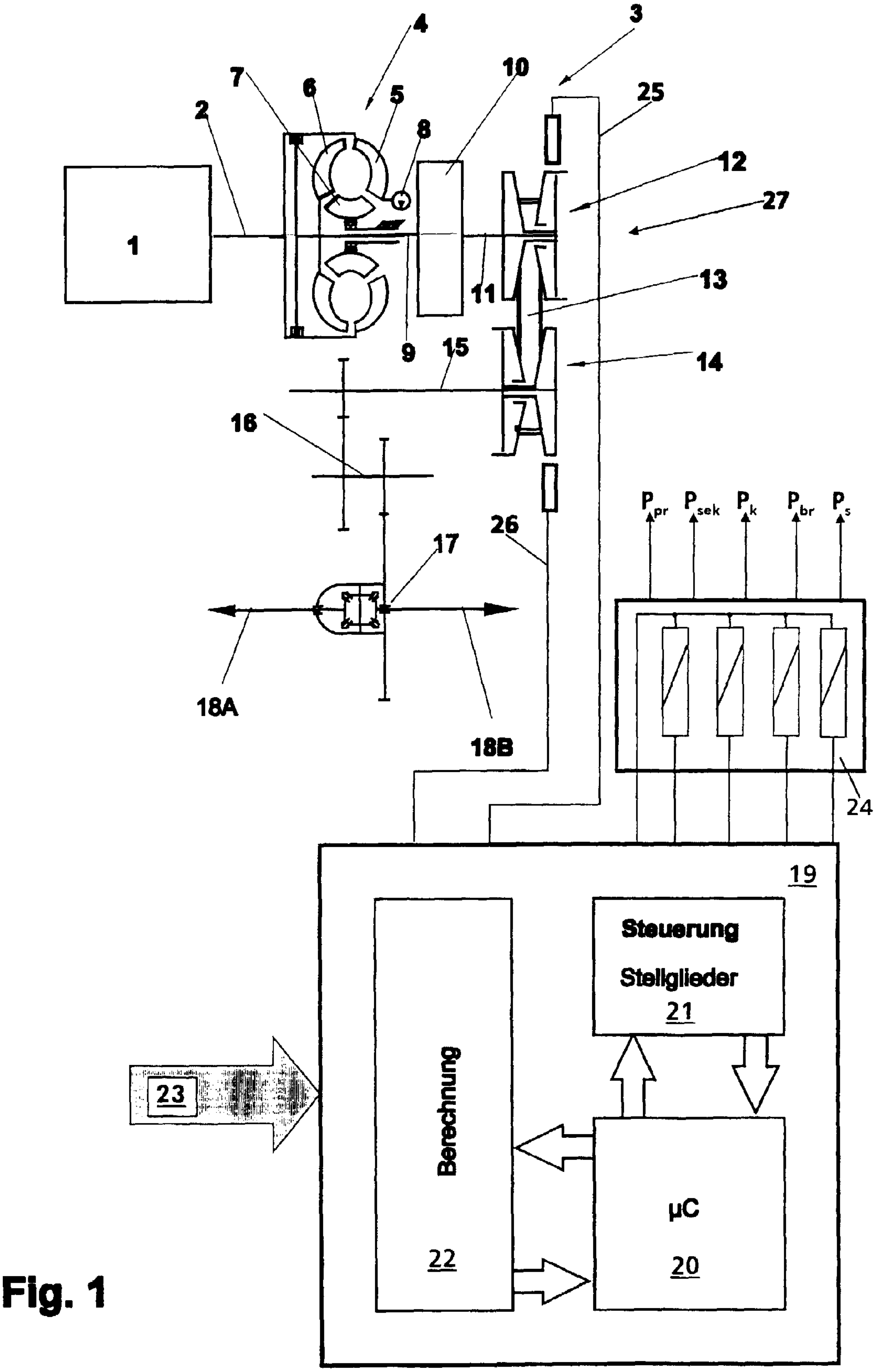
1
2
3
4
5
6
7
8
9
10
11
12
13
14
15
16
17
18A
18B
25
26
27
$P_{pr}$ $P_{sek}$ $P_k$ $P_{br}$ $P_s$
24
19
Steuerung
Stellglieder
21
Berechnung
22
μC
20
23

Fig. 1

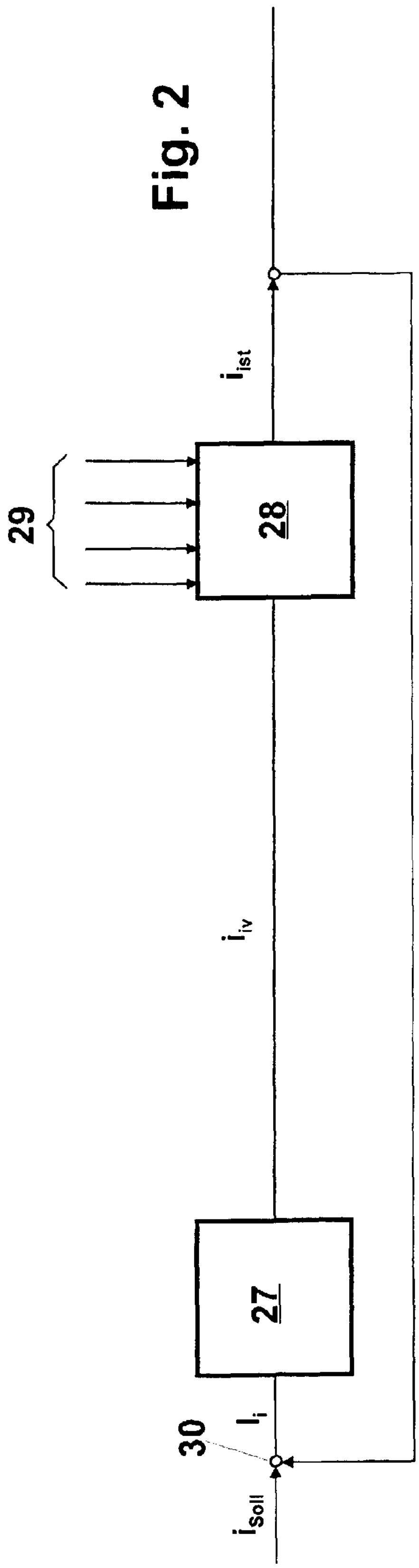
29
28
27
30
i_ist
i_iv
I_i
i_Soll

Fig. 2

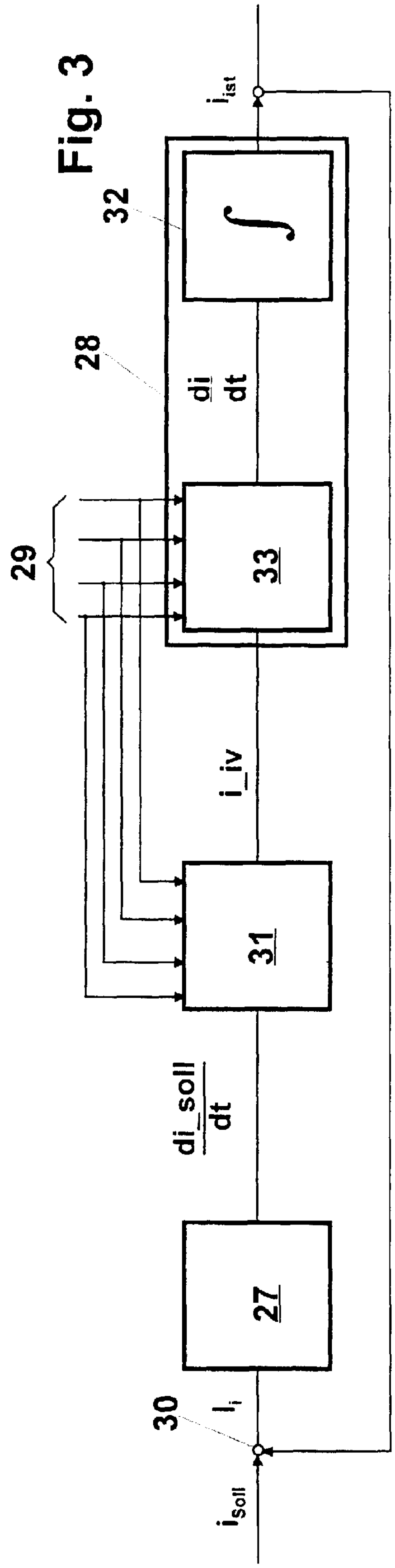
29
33
31
27
32
28
30
di/dt
di_soll/dt
i_iv
i_ist
I_i
i_Soll
∫

Fig. 3